# EUROPEAN PATENT APPLICATION

(11) **EP 4 349 539 A1**
(43) Date of publication of application: **10.04.2024**
(21) Application number: 22199388.4
(22) Date of filing: 03.10.2022
(51) Int. Cl.: B25J 9/16

(54) **HANDLING VARIABLE POWER IN A ROBOT AND ASSOCIATED METHOD**

(71) Applicant: Kassow Robots ApS, 2770 Kastrup (DK)
(72) Inventor: KASSOW, Kristian, 2300 Copenhagen S (DK); KIEFFER, Lasse, 5000 Odense C (DK)
(74) Representative: COPA Copenhagen Patents

(57) **Abstract**

The present disclosure relates to a robot, a control unit for a robot, and a method for controlling such a robot. The method comprises: receiving path data indicative of one or more paths for one or more parts of the robot, e.g. including the first joint assembly and/or the second joint assembly, to follow, receiving one or more electrical level inputs indicative of a voltage level input and/or a current level input, and determining a plurality of movements for the plurality of motors based on the path data and the voltage one or more electrical level inputs and/or the current level input.

## Description

The present disclosure relates to a robot, e.g. a robotic arm and/or a method for control of such robot or robotic arm.

### BACKGROUND

Robots and in particular robotic arms are widely used to perform a wide variety of automated tasks. Recently lightweight robots have increased in popularity for assisting human activities, e.g. in production facilities. These robots are commonly known as collaborative robots or cobots.

For robots, such as robotic arms, it is desirous to enhance flexibility and facilitate more compact robot solutions.

### SUMMARY

It is an object of the present disclosure to at least provide improvements of the prior art and/or to solve or reduce problems known from the prior art. further object of the present disclosure to provide an advantageous or at least alternative robot, robotic joint, robotic joint assembly and/or method for controlling a robot, robotic joint and/or robotic joint assembly.

More particularly, the present disclosure provides a solution which provides enhanced flexibility, at least in terms of allowing a more flexible powering of the robot. Furthermore, the present disclosure facilitates powering of the robot by a battery, which further enhance flexibility by enhancing the mobility of the robot. For example, the present disclosure may facilitate a robot forming part of an automated guided vehicle (AGV) and/or an autonomous mobile robot (AMR).

Thus, the present disclosure relates to a robot and methods for controlling a robot. Also, the present disclosure relates to a control unit for a robot. Accordingly, a robot, a control unit for such robot, and methods for controlling such robot are disclosed.

### GENERAL DESCRIPTION

The robot comprises one or more or a plurality of joint assemblies, e.g. including a first joint assembly and a second joint assembly. The robot further comprises one or more or a plurality of motors, e.g. including a first primary motor, a first secondary motor, a second primary motor, and/or a second secondary motor. The plurality of motors may be at least six motors, such as seven motors. Each of the plurality of motors may be a permanent magnet AC motor.

Each of the plurality of joint assemblies may comprise a joint housing and a primary motor connecting the joint housing with a primary link. The primary motor may be adapted to rotate the primary link relative to the joint housing around a primary axis. A joint assembly may further comprise a secondary motor connecting the joint housing with a secondary link. The secondary motor may be adapted to rotate the secondary link relative to the joint housing around a secondary axis. The secondary axis may be non-parallel with the primary axis.

The first joint assembly comprises a first joint housing and the first primary motor. The first primary motor connects the first joint housing with a first primary link. The first primary motor is adapted to rotate the first primary link relative to the first joint housing around a first primary axis. The first joint assembly may comprise a first secondary motor. The first secondary motor may connect the first joint housing with a first secondary link. The first secondary motor may be adapted to rotate the first secondary link relative to the first joint housing around a first secondary axis. The first secondary axis may be non-parallel with the first primary axis.

The second joint assembly may comprise a second joint housing and the second primary motor. The second primary motor may connect the second joint housing with a second primary link. The second primary motor may be adapted to rotate the second primary link relative to the second joint housing around a second primary axis. The second joint assembly may comprise the second secondary motor. The second secondary motor may connect the second joint housing with a second secondary link. The second secondary motor may be adapted to rotate the second secondary link relative to the second joint housing around a second secondary axis. The second secondary axis may be non-parallel with the second primary axis.

A primary link in relation to one joint assembly may be a secondary link in relation to another joint assembly. For example, the second primary link and the first secondary link may be the same link.

The first primary link may extend between a base of the robot and the first joint assembly. The second primary link and/or the first secondary link may extend between the first joint assembly and the second joint assembly.

The robot may comprise a power bus. The power bus may form part of a power supply of the robot. The power bus may comprise or be formed by two or more wires with differing voltage levels. The power bus may supply power to the plurality of motors, e.g. via one or more additional components, such as motor controllers, H-bridge, inverters etc. The power bus may be DC powered. The power bus may be powered by a battery, e.g. an internal battery of the robot and/or of the control unit. In some examples the battery may be an external battery. In some examples the robot and/or the control unit may comprise the battery. The battery may be coupled to the power bus.

The robot and/or the control unit may comprise a power connector. The power bus may be coupled to the power connector. The power connector may provide for coupling the power bus to an external power source, such as an external battery and/or an external power plug, such as a wall socket. The external power source may be a DC power source, e.g. at 24 volts, 48 volts or 72 volts.

The robot may comprise one or more controllers. The one or more controllers may be adapted to control operation of the one or more motors, such as the plurality of motors, to effectuate a desired movement of the robot. The one or more controllers may include a primary controller. The control unit may comprise the primary controller. Each of the one or more controllers, such as the primary controller, may be a control circuit, e.g. comprising a processing unit. The one or more controllers may include a plurality of motor controllers controlling operation of the plurality of motors. The plurality of motor controllers may include a first primary motor controller controlling operation of the first primary motor, a first secondary motor controller controlling operation of the first secondary motor, a second primary motor controller controlling operation of the second primary motor, and/or a second secondary motor controller controlling operation of the second secondary motor. The first joint assembly may comprise the first primary motor controller and/or the first secondary motor controller. The second joint assembly may comprise the second primary motor controller and/or the second secondary motor controller. In some examples, a single motor controller may control operation of a plurality of motors. For example, the first primary motor controller may control operation of the first primary motor and the first secondary motor, and/or the second primary motor controller may control operation of the second primary motor and the second secondary motor.

The method may comprise receiving path data indicative of one or more paths for one or more parts of the robot to follow. The one or more parts may include the first joint assembly and/or the second joint assembly. Alternatively or additionally, the one or more parts may include an end effector of the robot. The method may further comprise determining a plurality of movements for the plurality of motors based on the path data.

The method may further comprise receiving one or more electrical level inputs, such as a voltage level input and/or a current level input and/or a power level input, e.g. prior to determining the plurality of movements for the plurality of motors. The one or more electrical level inputs may be received from a user via a user interface, such as a graphical user interface, such as a user interface for configuring the robot. The user interface for configuring the robot may, for example, be displayed on a teach pendant of the robot. The one or more electrical level inputs may be indicative of a voltage level and/or a current level. The one or more electrical level inputs may be indicative of a power level, which in turn is indicative of a current level because voltage is known, measured or indicated also.

The one or more electrical level inputs, may, for example, be a user indicating during a configuration procedure a voltage level, a current level and/or a power level at which the robot should be able to work.

For example, the one or more electrical level inputs, such as the voltage level input, may be indicative of a minimum expected voltage level. The one or more electrical level inputs, such as the voltage level input, may be indicative of a voltage level, which is lower than a nominal voltage level for the robot. Determining the plurality of movements for the plurality of motors may be based on the one or more electrical level inputs, such as the voltage level input. Thus, a user may specify, e.g. during configuration of the robot, that the robot should be configured to be able to work at a lower than nominal voltage level, and the plurality of movements for the plurality of motors may be determined accordingly.

For example, the plurality of movements based on the path data and the one or more electrical level inputs, such as the voltage level input, may include determining velocity and/or acceleration of one or more or all of the plurality of motors. The velocities of the one or more or all of the plurality of motors may be first velocities when the one or more electrical level inputs, such as the voltage level input, are indicative of a first voltage level. The velocities of the one or more or all of the plurality of motors may be second velocities respectively lower than the first velocities when the one or more electrical level inputs, such as the voltage level input, are indicative of a second voltage level lower than the first voltage level. The respective relative differences between the first velocities and the second velocities may be proportional with the relative difference between the first voltage level and the second voltage level.

Additionally or alternatively, the one or more electrical level inputs, such as the current level input and/or the power level input, may be indicative of a maximum acceptable current level. The one or more electrical level inputs, such as the current level input and/or the power level input, may be indicative of a current level, which is lower than a normal maximum current level for the robot. Determining the plurality of movements for the plurality of motors may be based on the one or more electrical level inputs, such as the current level input and/or the power level input. Thus, a user may specify, e.g. during configuration of the robot, that the robot should be configured to not exceed a set current level and/or power level, and the plurality of movements for the plurality of motors may be determined accordingly.

For example, the plurality of movements based on the path data and the one or more electrical level inputs, such as the current level input and/or the power level input (and optionally the voltage level input), may include determining velocity and/or acceleration of one or more or all of the plurality of motors. The velocities of the one or more or all of the plurality of motors may be primary velocities when the one or more electrical level inputs, such as the current level input and/or the power level input, are indicative of a primary current level. The velocities of the one or more or all of the plurality of motors may be secondary velocities respectively lower than the primary velocities when the one or more electrical level inputs, such as the current level input and/or the power level input, are indicative of a secondary current level lower than the primary current level. The respective relative differences between the primary velocities and the secondary velocities may be proportional with the relative difference between the primary current level and the secondary current level.

The method may comprise receiving a voltage sensor input, e.g. indicative of a voltage level of the power bus, e.g. after determining the plurality of movements. In accordance with the voltage sensor input being indicative of the voltage level being below a predetermined voltage threshold, the method may further comprise modifying the plurality of movements based on the voltage sensor input. Thus, the movements may be modified dynamically, when a lower voltage level is detected, which may be due to the robot being coupled to a power source, which provides a lower voltage, or may be due to a battery supplying power to the robot supplying a lower voltage as it is being discharged.

Alternatively, or additionally, the method may comprise receiving one or more updated electrical level inputs, e.g. including an updated current level input and/or an updated power level input, e.g. indicative of an updated available current on the power bus. The one or more updated electrical level inputs may be received after determining the plurality of movements. In accordance with the one or more updated electrical level inputs, such as the updated current level input and/or the updated power level input, being indicative of a current level below a predetermined current threshold, the method may further comprise modifying the plurality of movements based on the one or more updated electrical level inputs, such as the updated current level input and/or the updated power level input. Thus, the movements may be modified dynamically, when less current is available, which may be due to other components drawing current from the same power source as the robot. For example, the one or more updated electrical level inputs, such as the updated current level input and/or the updated power level input, may be based on evaluation of operation of components external to the robot, which may be drawing current from the same power source as the robot. Such other components may, for example, be a motor driving the wheels of an AGV or AMR carrying the robot. The one or more updated electrical level inputs, such as the updated current level input and/or the updated power level input, may be received from a power controller, which may be evaluating the operation of the components external to the robot.

The method may be performed by the one or more controllers of the robot. For example, the method, or parts thereof, may be performed by the primary controller of the control unit. For example, the one or more controllers and/or the primary controller may be adapted to receive the path data indicative of one or more paths for one or more parts of the robot to follow. The one or more parts may include the first joint assembly and/or the second joint assembly. Alternatively or additionally, the one or more parts may include an end effector of the robot. The one or more controllers and/or the primary controller may be adapted to determine the plurality of movements for the plurality of motors of the robot based on the path data. The one or more controllers and/or the primary controller may be further adapted to receive the one or more electrical level inputs and determining the plurality of movements for the plurality of motors may additionally be based on the one or more electrical level inputs, such as the voltage level input and/or the current level input and/or the power level input.

The one or more controllers and/or the primary controller may be adapted to receive the voltage sensor input, e.g. indicative of a voltage level of the power bus of the robot. In accordance with the voltage sensor input being indicative of the voltage level being below the predetermined voltage threshold, the one or more controllers and/or the primary controller may be further adapted to modify the plurality of movements based on the voltage sensor input. Alternatively, or additionally, the one or more controllers and/or the primary controller may be adapted to receive the one or more updated electrical level inputs, such as the updated current level input and/or the updated power level input, e.g. indicative of an updated available current on the power bus. In accordance with the one or more updated electrical level inputs, such as the updated current level input and/or the updated power level input, being indicative of a current level below the predetermined current threshold, the one or more controllers and/or the primary controller may be further adapted to modify the plurality of movements based on the one or more updated electrical level inputs, such as the updated current level input and/or the updated power level input.

The plurality of movements for the plurality of motors may be indicative of movement of each of the motors, which in effect may be indicative of movement of each of the joint assemblies. For example, the plurality of movements for the plurality of motors may include position, velocity and/or acceleration over time for each of the joint assemblies and/or for each of the plurality of motors.

In some examples, the primary controller may be adapted to receive the path data and determine the plurality of movements based on the path data and optionally the one or more electrical level inputs, while others of the one or more controllers, e.g. the plurality of motor controllers and/or one or more of the plurality of motor controllers, such as the first primary motor controller, the first secondary motor controller, the second primary motor controller, and/or the second secondary motor controller, may be adapted to modify the plurality of movements based on the voltage sensor input and/or the one or more updated electrical level inputs, in accordance with the voltage sensor input being indicative of the voltage level being below the predetermined voltage threshold and/or in accordance with the one or more updated electrical level inputs being indicative of a current level below the predetermined current threshold. In such examples the primary controller and/or the plurality of motor controllers and/or one or more of the plurality of motor controllers, such as the first primary motor controller, the first secondary motor controller, the second primary motor controller, and/or the second secondary motor controller, may receive the voltage sensor input and/or the one or more updated electrical level inputs.

An advantage of the present disclosure is that the robot may be adjusted and/or may self-adjust if being supplied a voltage which is lower than expected and/or if less current as initially expected is available. Thereby the robot may be able to operate at a variety of voltage levels, e.g. both at 48 volts DC and 24 volts DC and/or at various current levels. Furthermore, the robot may be able to operate with varying input voltage, which may be caused by the power source being a battery, which may provide a varying voltage, e.g. depending on state of charge. For example, an exemplary battery rated at 48 volts may provide a voltage of 52 volts at around 90% charge, 48 volts at around 50% charge, and 43 volts at around 10% charge. Thus, for facilitating powering of the robot by a battery, it may be advantageous to provide a system, which allows the robot to work also at varying or lower than expected voltages.

The motors of the robot, e.g. the first primary motor, the first secondary motor, the second primary motor, and/or the second secondary motor, may be designed to operate at a nominal voltage level of the power bus, e.g. 48 volts. If the motors, e.g. the first primary motor, the first secondary motor, the second primary motor, and/or the second secondary motor, are supplied a (substantially) lower voltage, e.g. 24 volts, it may result in the motors not being able to operate as intended. Similarly, in some situation a power source, such as a battery, may not be able to supply an otherwise expected amount of current to the robot, and may stop working if the robot is drawing too much current. The present disclosure may account for such reduced capability and enhance the flexibility of the robot and control thereof.

The motors of the robot, e.g. the first primary motor, the first secondary motor, the second primary motor, and/or the second secondary motor, may be capable of operating as intended within some range of voltages. Thus, the disclosure may allow some variance in the voltage level of the power bus, before modifying the movements. Hence, the predetermined voltage threshold may be below a nominal voltage of the power bus. For example, the predetermined voltage threshold may be at least 5% below the nominal voltage. For example, the predetermined voltage threshold may be between 5-10% below the nominal voltage. For example, the predetermined voltage threshold may be 5% or 7% or 9% or 10% below the nominal voltage. The nominal voltage may, for example, be 72 volts, 48 volts, or 24 volts. In some examples, the predetermined voltage threshold may be based on the one or more electrical level inputs, such as the voltage level input. For example, in situations where the plurality of movements has been determined based on the one or more electrical level inputs, such as the voltage level input, the predetermined voltage threshold may be based thereon, such that modification of the plurality of movements is performed when the voltage level is below the voltage level expected when initially determining the movements. For example, the one or more electrical level inputs, such as the voltage level input, may be indicative of an initial voltage level and the predetermined voltage threshold may be below the initial voltage level. For example, the predetermined voltage threshold may be at least 5% below the initial voltage level. For example, the predetermined voltage threshold may be between 5-10% below the initial voltage level. For example, the predetermined voltage threshold may be 5% or 7% or 9% or 10% below the initial voltage level.

Similarly, the predetermined current threshold may be at least 5% below a normal maximum current level for the robot. For example, the predetermined current threshold may be between 5-10% below the normal maximum current level. For example, the predetermined current threshold may be 5% or 7% or 9% or 10% below the normal maximum current level. The normal maximum current level may, for example, be 40 amperes, 20 amperes, or 10 amperes. In some examples, the predetermined current threshold may be based on the one or more electrical level inputs, such as the current level input and/or the power level input. For example, in situations where the plurality of movements has been determined based on the one or more electrical level inputs, such as the current level input and/or the power level input, the predetermined current threshold may be based thereon, such that modification of the plurality of movements is performed when the current level (as indicated by the one or more updated electrical level inputs, such as the updated current level input and/or the updated power level input) is below the initial current level expected when initially determining the movements. For example, the one or more electrical level inputs, such as the current level input and/or the power level input, may be indicative of an initial current level and the predetermined current threshold may be below the initial current level. For example, the predetermined current threshold may be at least 5% below the initial current level. For example, the predetermined current threshold may be between 5-10% below the initial current level. For example, the predetermined current threshold may be 5% or 7% or 9% or 10% below the initial current level.

Modifying the plurality of movements based on the voltage sensor input and/or the one or more updated electrical level inputs, such as the updated current level input and/or the updated power level input, may include reducing a velocity of one or more or all of the plurality of motors, such as of the first primary motor, the first secondary motor, the second primary motor, and/or the second secondary motor. For example, one or more or all of the plurality of motors, such as of the first primary motor, the first secondary motor, the second primary motor, and/or the second secondary motor may be instructed to operate at a lower velocity when the voltage level of the power bus is lower than the predetermined voltage threshold and/or when the one or more electrical level inputs, such as the updated current level input and/or the updated power level input, is indicative of a current level below the predetermined current threshold. For example, the plurality of movements may be modified by reducing the velocity profile for each of the one or more or all of the plurality of motors. Alternatively or additionally, the plurality of movements may be modified by redetermining the plurality of movements for the plurality of motors based on the path data and a reduced maximum velocity for one or more or all of the plurality of motors, such as the first primary motor, the first secondary motor, the second primary motor, and/or the second secondary motor. The reduced maximum velocity may be based on the voltage sensor input and/or on the voltage level of the power bus. Alternatively, or additionally, the reduced maximum velocity may be based on the one or more updated electrical level inputs, such as the updated current level input and/or the updated power level input. The reduced maximum velocity may be below a nominal velocity for the respective one or more or all of the plurality of motors. An exemplary nominal velocity may be 3000 rpm for the rotor of the motor and/or may be 225 degrees/second for the output of the motor (including gearing of the motor).

The reduction in velocity of the one or more or all of the plurality of motors may be proportional (e.g. stepwise proportional) with the relative difference between the voltage level and the predetermined voltage threshold and/or proportional with the relative difference between the voltage level and the nominal voltage of the power bus and/or proportional with the relative difference between the voltage level and the initial voltage level (indicated by the one or more electrical level inputs, such as the voltage level input). For example, the plurality of movements may be modified by reducing the velocity profile for each of the one or more or all of the plurality of motors proportional to the relative difference between the voltage level and the predetermined voltage threshold and/or the nominal voltage of the power bus and/or the initial voltage level. Alternatively or additionally, in the case of redetermining the plurality of movements based on the reduced maximum velocity, the reduced maximum velocity may be proportional with the relative difference between the voltage level and the predetermined voltage threshold and/or proportional with the relative difference between the voltage level and the nominal voltage of the power bus and/or proportional with the relative difference between the voltage level and the initial voltage level.

Alternatively, or additionally, the reduction in velocity of the one or more or all of the plurality of motors may be proportional (e.g. stepwise proportional) with the relative difference between the current level indicated by the one or more updated electrical level inputs and the normal maximum current level of the robot and/or proportional with the relative difference between the current level indicated by the one or more updated electrical level inputs and the predetermined current threshold and/or proportional with the relative difference between the current level indicated by the one or more updated electrical level inputs and the initial current level indicated by the one or more electrical level inputs. For example, the plurality of movements may be modified by reducing the velocity profile for each of the one or more or all of the plurality of motors proportional to the relative difference between the current level indicated by the one or more updated electrical level inputs and the normal maximum current level of the robot and/or the predetermined current threshold and/or the initial current level indicated by the one or more electrical level inputs. Alternatively or additionally, in the case of redetermining the plurality of movements based on the reduced maximum velocity, the reduced maximum velocity may be proportional with the relative difference between the current level indicated by the one or more updated electrical level inputs and the normal maximum current level of the robot and/or proportional with the relative difference between the current level indicated by the one or more updated electrical level inputs and the predetermined current threshold and/or proportional with the relative difference between the current level indicated by the one or more updated electrical level inputs and the initial current level indicated by the one or more electrical level inputs.

Modifying the plurality of movements based on the voltage sensor input and/or the one or more updated electrical level inputs, such as the updated current level input and/or the updated power level input, may include reducing an acceleration (e.g. in combination with reducing the velocity) of one or more or all of the plurality of motors, such as of the first primary motor, the first secondary motor, the second primary motor, and/or the second secondary motor. For example, one or more or all of the plurality of motors, such as of the first primary motor, the first secondary motor, the second primary motor, and/or the second secondary motor may be instructed to operate at a lower acceleration when the voltage level of the power bus is lower than the predetermined voltage threshold and/or when the one or more updated electrical level inputs are indicative of a current level below the predetermined current threshold. For example, the plurality of movements may be modified by reducing the acceleration profile for each of the one or more or all of the plurality of motors. Alternatively or additionally, the plurality of movements may be modified by redetermining the plurality of movements for the plurality motors based on the path data and a reduced maximum acceleration for one or more or all of the plurality of motors, such as the first primary motor, the first secondary motor, the second primary motor, and/or the second secondary motor. The reduced maximum acceleration may be based on the voltage sensor input and/or on the voltage level of the power bus. Alternatively, or additionally, the reduced maximum acceleration may be based on the one or more updated electrical level inputs, such as the updated current level input and/or the updated power level input. The reduced maximum acceleration may be below a nominal acceleration for the respective one or more or all of the plurality of motors.

The reduction in acceleration of the one or more or all of the plurality of motors may be proportional (e.g. stepwise proportional) with the relative difference between the voltage level and the predetermined voltage threshold and/or proportional with the relative difference between the voltage level and the nominal voltage of the power bus and/or proportional with the relative difference between the voltage level and the initial voltage level (indicated by the one or more electrical level inputs, such as the voltage level input). For example, the plurality of movements may be modified by reducing the acceleration profile for each of the one or more or all of the plurality of motors proportional to the relative difference between the voltage level and the predetermined voltage threshold and/or the nominal voltage of the power bus and/or the initial voltage level. Alternatively or additionally, in the case of redetermining the plurality of movements based on the reduced maximum acceleration, the reduced maximum acceleration may be proportional with the relative difference between the voltage level and the predetermined voltage threshold and/or proportional with the relative difference between the voltage level and the nominal voltage of the power bus and/or proportional with the relative difference between the voltage level and the initial voltage level.

Alternatively, or additionally, the reduction in acceleration of the one or more or all of the plurality of motors may be proportional (e.g. stepwise proportional) with the relative difference between the current level indicated by the one or more updated electrical level inputs and the normal maximum current level of the robot and/or proportional with the relative difference between the current level indicated by the one or more updated electrical level inputs and the predetermined current threshold and/or proportional with the relative difference between the current level indicated by the updated current level and the initial current level indicated by the one or more updated electrical level inputs. For example, the plurality of movements may be modified by reducing the acceleration profile for each of the one or more or all of the plurality of motors proportional to the relative difference between the current level indicated by the one or more updated electrical level inputs and the normal maximum current level of the robot and/or the predetermined current threshold and/or the initial current level indicated by the one or more updated electrical level inputs. Alternatively or additionally, in the case of redetermining the plurality of movements based on the reduced maximum acceleration, the reduced maximum acceleration may be proportional with the relative difference between the current level indicated by the one or more updated electrical level inputs and the normal maximum current level of the robot and/or proportional with the relative difference between the current level indicated by the one or more updated electrical level inputs and the predetermined current threshold and/or proportional with the relative difference between the current level indicated by the updated current level and the initial current level indicated by the one or more updated electrical level inputs.

The reduction in velocity and/or acceleration of the one or more or all of the plurality of motors may be done in predetermined steps. For example, the reduction in velocity and/or acceleration of the one or more or all of the plurality of motors may include reducing the velocity and/or acceleration of the one or more or all of the plurality of motors to a first reduction level if the voltage sensor input is indicative of the voltage level being between the predetermined voltage threshold and a first step threshold, and reducing the velocity and/or acceleration of the one or more or all of the plurality of motors by a second reduction level if the voltage sensor input is indicative of the voltage level being between the first step threshold and a second step threshold. The second step threshold may be lower than the first step threshold. The second reduction level may be lower than the first reduction level. For example the first step threshold may be 90% of the predetermined voltage threshold and the second step threshold may be 80% of the predetermined voltage threshold. Thus, in such example, the velocity and/or acceleration of the one or more or all of the plurality of motors will be reduced to the first reduction level, e.g. 85% of nominal velocity and/or acceleration, when the voltage level is between the predetermined voltage threshold and 90% of the predetermined voltage threshold, and to the second reduction level, e.g. 75% of nominal velocity and/or acceleration, when the voltage level is between the predetermined voltage threshold and 80% of the predetermined voltage threshold. Alternatively, or additionally, the reduction in velocity and/or acceleration of the one or more or all of the plurality of motors may include reducing the velocity and/or acceleration of the one or more or all of the plurality of motors to a first reduction level if the one or more updated electrical level inputs, such as the updated current level input and/or the updated power level input, are indicative of a current level being between the predetermined current threshold and a first current step threshold, and reducing the velocity and/or acceleration of the one or more or all of the plurality of motors by a second reduction level if the one or more updated electrical level inputs, such as the updated current level input and/or the updated power level input, is indicative of a current level being between the first current step threshold and a second current step threshold. The second current step threshold may be lower than the first current step threshold. The second reduction level may be lower than the first reduction level. For example, the first current step threshold may be 90% of the predetermined current threshold and the second current step threshold may be 80% of the predetermined current threshold.

Modifying the plurality of movements may include motor controllers modifying operation of respective motors based on the voltage sensor input and/or the one or more updated electrical level inputs, such as the updated current level input and/or the updated power level input. For example, the first primary motor controller may modify operation of the first primary motor and/or the first secondary motor based on the voltage sensor input and/or the one or more updated electrical level inputs, such as the updated current level input and/or the updated power level input. The first secondary motor controller may modify operation of the first secondary motor based on the voltage sensor input and/or the one or more updated electrical level inputs, such as the updated current level input and/or the updated power level input. The second primary motor controller may modify operation of the second primary motor and/or the second secondary motor based on the voltage sensor input and/or the one or more updated electrical level inputs, such as the updated current level input and/or the updated power level input. The second secondary motor controller may modify operation of the second secondary motor based on the voltage sensor input and/or the one or more updated electrical level inputs, such as the updated current level input and/or the updated power level input. The motor controllers may modify operation of the respective motor by adjusting a pulse width of a pulse width modulated signal transmitted to the respective motor(s).

If a later measured voltage sensor input is indicative of the voltage level of the power bus again being above a certain level, for example, being above the predetermined voltage threshold and/or above a secondary voltage threshold, which may be higher than the predetermined voltage threshold, e.g. 5% higher, the plurality of movements may again be modified based on the later measured voltage sensor input, for example, by increasing the velocity and/or acceleration of the movements. Similarly, if later updated one or more electrical level inputs, such as a later updated current level input and/or a later updated power level input, are indicative of available current again being above a certain level, for example, being above the predetermined current threshold and/or above a secondary current threshold, which may be higher than the predetermined current threshold, e.g. 5% higher, the plurality of movements may again be modified based on the later updated one or more electrical level inputs, such as a later updated current level input and/or a later updated power level input, for example, by increasing the velocity and/or acceleration of the movements. Thus, if the voltage level and/or current level is only temporarily lowered, the velocity and/or acceleration may return to their initial level when initial, e.g. nominal, voltage level and/or current level is re-established.

The control unit may be adapted to be arranged between a base of the robot and a structure to which the robot is to be fastened. The structure may be a factory floor or another structure from which the robot is meant to work from. The control unit may be arranged below the base of the robot.

The control unit may comprise a control unit housing. The control unit housing may comprise a bottom plate and a sidewall. The sidewall may be one integrally formed sidewall. Alternatively, the sidewall may be made up of a plurality of sidewall parts. The bottom plate may be adapted to abut the structure. The sidewall may be integrally formed with the bottom plate. e.g. the sidewall and the bottom plate may be cast in one piece and/or may be machined from a single block of material. The control unit housing, such as the bottom plate and/or the sidewall, may be made of aluminium.

The primary controller may be arranged in the control unit housing.

The control unit may comprise a power supply unit. The power supply unit may be adapted to power the robot, such as electrical components of the robot, e.g. motors and/or circuitry. The power supply unit may be arranged in the control unit housing. The power supply unit may be coupled and/or couplable to the power bus of the robot.

The control unit may comprise one or more, such as a plurality of, electrical control unit connectors (e.g. sockets or plugs). The one or more electrical control unit connectors may include a first electrical control unit connector, a second electrical control unit connector, and/or a third electrical control unit connector. Each of the one or more electrical control unit connectors may comprise respective control unit terminals. The first electrical control unit connector, the second electrical control unit connector, and/or the third electrical control unit connector may be the power connector. The first electrical control unit connector, the second electrical control unit connector, and/or the third electrical control unit connector may be arranged through the sidewall. The first electrical control unit connector, the second electrical control unit connector, and/or the third electrical control unit connector may be adapted to couple with a teach pendant connector of a teach pendant, e.g. for controlling and/or programming the robot. The first electrical control unit connector, the second electrical control unit connector, and/or the third electrical control unit connector may be an ethernet connector or a USB connector.

The robot may comprise one or more, such as a plurality of, electrical base connectors (e.g. sockets or plugs), which may be arranged at the base of the robot. The one or more electrical base connectors may include a first electrical base connector and/or a second electrical base connector. The first electrical base connector may be the power connector. The second electrical base connector may be an I/O port.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating an exemplary robot,
Fig. 2 is a schematic diagram illustrating an exemplary joint assembly,
Fig. 3 shows an exemplary block diagram of some components of an exemplary robot,
Fig. 4 is a schematic diagram illustrating an exemplary user interface, and
Figs. 5 and 6 schematically illustrates an exemplary control unit.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

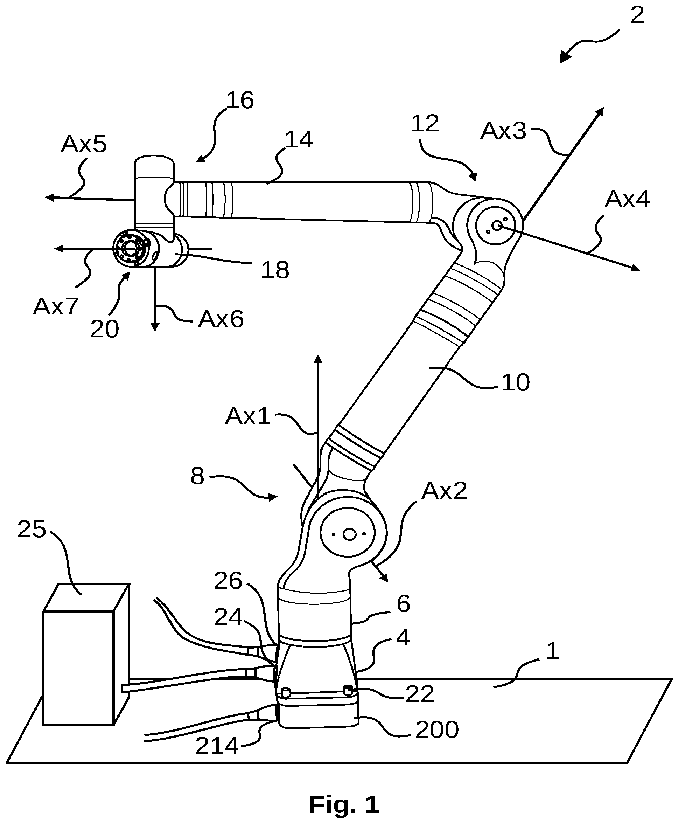

Fig. 1 is a schematic diagram illustrating an exemplary robot 2, which in the present example is a robotic arm, more particularly, a seven-axis robotic arm. In the present example, the robot 2 is fastened to a structure 1, which may be a factory floor or another structure from which the robot 2 is meant to work from. In some examples, the structure 1 may be part of a movable unit, such as a mobile robot or a vehicle, which would allow the robot 2 to be moved between different positions.

The robot 2 comprises a plurality of joint assemblies, including a first joint assembly 8, a second joint assembly 12, a third joint assembly 16, and a fourth joint assembly 20. In other examples, the robot may comprise fewer or more joint assemblies. For example, the robot 2 may, in another configuration, comprise only one joint assembly, such as the first joint assembly 8.

The robot 2 comprises a plurality of links, including a first link 6, a second link 10, a third link 14, and a fourth link 18. The links extends between the joint assemblies. For example, the first link 6 extends between a base 4 of the robot 2 and the first joint assembly 8. The second link 10 extends between the first joint assembly 8 and the second joint assembly 12. The third link 14 extends between the second joint assembly 12 and the third joint assembly 16. The fourth link 18 extends between the third joint assembly 16 and the fourth joint assembly 20.

Each of the joint assemblies 8, 12, 16, 20 are adapted to rotate one or more respective links relative to the joint assembly around an axis. For example, the first joint assembly 8 is adapted to rotate the first link 6 relative to the first joint assembly 8 around a first axis Ax1. The first joint assembly 8 is adapted to rotate the second link 10 relative to the first joint assembly 8 around a second axis Ax2. The second axis Ax2 is non-parallel with the first axis Ax1. The second joint assembly 12 is adapted to rotate the second link 10 relative to the second joint assembly 12 around a third axis Ax3. The second joint assembly 12 is adapted to rotate the third link 14 relative to the second joint assembly 12 around a fourth axis Ax4. The fourth axis Ax4 is non-parallel with the third axis Ax3. The third joint assembly 16 is adapted to rotate the third link 14 relative to the third joint assembly 16 around a fifth axis Ax5. The third joint assembly 16 is adapted to rotate the fourth link 18 relative to the third joint assembly 16 around a sixth axis Ax6. The sixth axis Ax6 is non-parallel with the fifth axis Ax5. The fourth joint assembly 20 is adapted to rotate the fourth link 18 relative to the fourth joint assembly 20 around a seventh axis Ax7. The robot 2 may be put in some configurations where none of the seven axes Ax1-Ax7 are parallel. However, in some other configurations two or more of the seven axes may be parallel. An end effector of the robot 2 may be provided at the distal end of the robot 2, such as at the fourth joint assembly 20.

Although being described in relation to a robot 2 being operable relative to seven axes, the present disclosure may alternatively be applied to a robot having only six axes, or even fewer axes. For example, with respect to the example illustrated in Fig. 1, movement around the third axis Ax3, may be omitted, to obtain a robot operable relative to six axes. In such situation, the first joint assembly 8 may be adapted to rotate the first link 6 relative to the first joint assembly 8 around the first axis Ax1 and to rotate the second link 10 relative to the first joint assembly 8 around the second axis Ax2. The second joint assembly 12 may be adapted to rotate the third link 14 relative to the second joint assembly 12 around the fourth axis Ax4 and to rotate the third link 14 relative to the second joint assembly 12 around the fifth axis Ax5. The third joint assembly 16 may be adapted to rotate the third link 14 relative to the third joint assembly 16 around the sixth axis Ax6 and to rotate the fourth link 18 relative to the third joint assembly 16 around the seventh axis Ax7. The fourth joint assembly 20 may be omitted. Hence, a robot operable relative to six axes may be realised with only three joint assemblies according to the present disclosure.

The robot 2, as illustrated, may comprise a control unit 200. The control unit 200 is adapted to be arranged between the base 4 of the robot 2 and the structure 1. The control unit 200 may be provided as an additional unit. Thus, in some examples the base 4 may fastened to the structure 1, such as to fasten the robot 2 to the structure 1, and an external control unit may be provided to control the robot 2. However, as illustrated, the control unit 200 may be arranged between the base 4 and the structure 1. The control unit 200 may comprise circuitry, such as one or more processing units, adapted to control operation of the robot 2 to effectuate a desired movement of the robot 2.

The robot 2 may be fastened to the structure 1 by fastening bolts 22. The fastening bolts 22 may extend from the base 4, through attachment holes of the control unit 200, and to the structure 1, thereby fastening both the robot and the control unit 200 to the structure 1.

The robot may comprise a first electrical base connector 24 arranged at the base 4 of the robot 2. In some examples, the first electrical base connector 24 may be a power connector adapted to receive power for powering the robot 2. In some examples, the power connector may be adapted for coupling to an external power source 25, such as an external battery. The external power source 25 may be a DC power source, e.g. at 24 volts or 48 volts. The robot may comprise a second electrical base connector 26 arranged at the base 4 of the robot 2. In some examples, the second electrical base connector 26 may be an I/O port. The control unit 200 may also comprise, as illustrated, an electrical control unit connector, which, for example, may be adapted to couple with a teach pendant connector of a teach pendant for controlling and/or programming the robot.

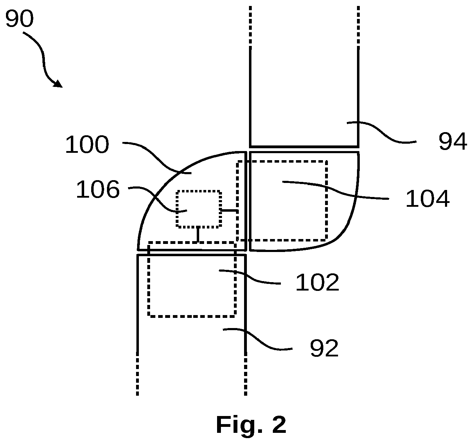

Fig. 2 is a schematic diagram illustrating an exemplary joint assembly 90, which may be any of the first, second, or third joint assemblies 8, 12, 16 as shown in Fig. 1.

The joint assembly 90 comprises a joint housing 100. The joint assembly 90 comprises a primary motor 102 connecting the joint housing 100 with a primary link 92 (e.g. the first link 6, the second link 10, or the third link 14 of Fig. 1). The primary motor 102 is adapted to rotate the primary link 92 relative to the joint housing 100 around a primary axis (e.g. the first axis Ax1, the third axis Ax3, the fifth axis Ax5, or the seventh axis Ax7 of Fig. 1). The illustrated joint assembly 90 comprises an optional secondary motor 104 connecting the joint housing 100 with a secondary link 94 (e.g. the second link 10, the third link 14, or the fourth link 18 of Fig. 1). The secondary motor 104 is adapted to rotate the secondary link 94 relative to the joint housing 100 around a secondary axis (e.g. the second axis Ax2, the fourth axis Ax4, or the sixth axis Ax6 of Fig. 1). The joint assembly 90 comprises circuitry 106, e.g. a first PCB, accommodated in the joint housing 100. The circuitry 106 is adapted to control the primary motor 102 and the secondary motor 104. The primary motor 102 and/or the secondary motor 104 may be a permanent magnet AC motor. Furthermore, the primary motor 102 and/or the secondary motor 104 may comprise a gear assembly, e.g. an integral gear, such as a strain wave gear. Hence, the primary motor 102 and/or the secondary motor 104 may be a gear motor.

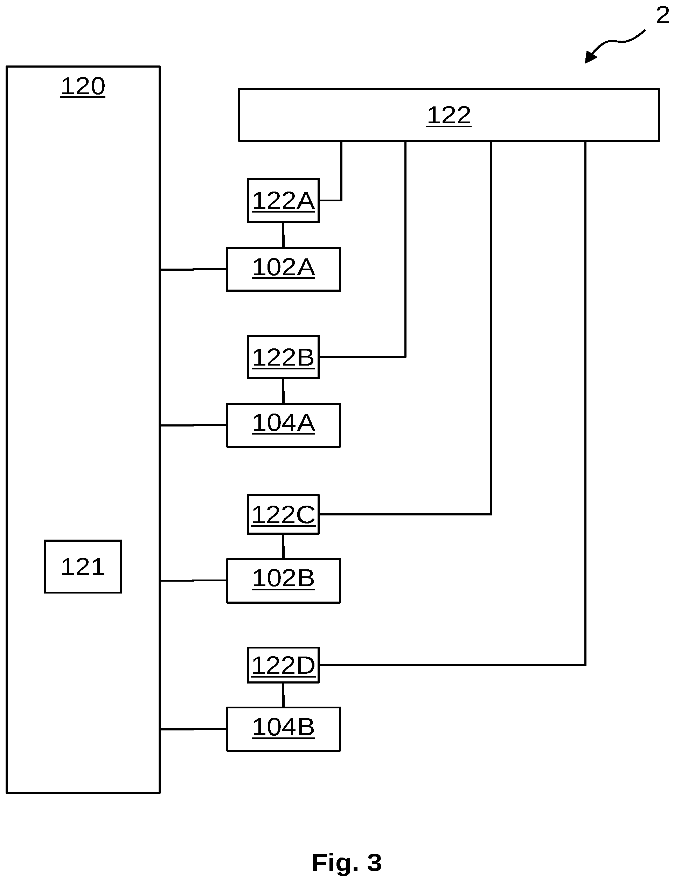

Fig. 3 shows an exemplary block diagram of some components of an exemplary robot 2, such as the robot 2 of Fig. 1. As illustrated, the robot 2 comprises a plurality of motors including a first primary motor 102A and a second primary motor 102B. As also illustrated, the plurality of motors may comprise a first secondary motor 104A and/or a second secondary motor 104B. While, only four motors are illustrated in the exemplary block diagram, it should be understood that more motors may be provided for the robot 2 to be movable relative to more axes, such as seven as illustrated in Fig. 1.

The plurality of motors may form part of one or more joint assemblies of the robot 2, as explained in relation to Fig. 2. For example, the first primary motor 102A and the optional first secondary motor 104A may form part of a first joint assembly of the robot 2. Similarly, the second primary motor 102B and the optional second secondary motor 104B may form part of a second joint assembly of the robot 2.

The first primary motor 102A may connect a first joint housing of the first joint assembly with a first primary link. The first primary motor 102A may be adapted to rotate the first primary link relative to the first joint housing around a first primary axis, as explained in relation to Fig. 2.

The first secondary motor 104A may connect the first joint housing with a first secondary link. The first secondary motor 104A may be adapted to rotate the first secondary link relative to the first joint housing around a first secondary axis, as explained in relation to Fig. 2.

The second primary motor 102B may connect a second joint housing of the second joint assembly with a second primary link. The second primary motor 102B may be adapted to rotate the second primary link relative to the second joint housing around a second primary axis, as explained in relation to Fig. 2.

The second secondary motor 104B may connect the second joint housing with a second secondary link. The second secondary motor 104B may be adapted to rotate the second secondary link relative to the second joint housing around a second secondary axis, as explained in relation to Fig. 2.

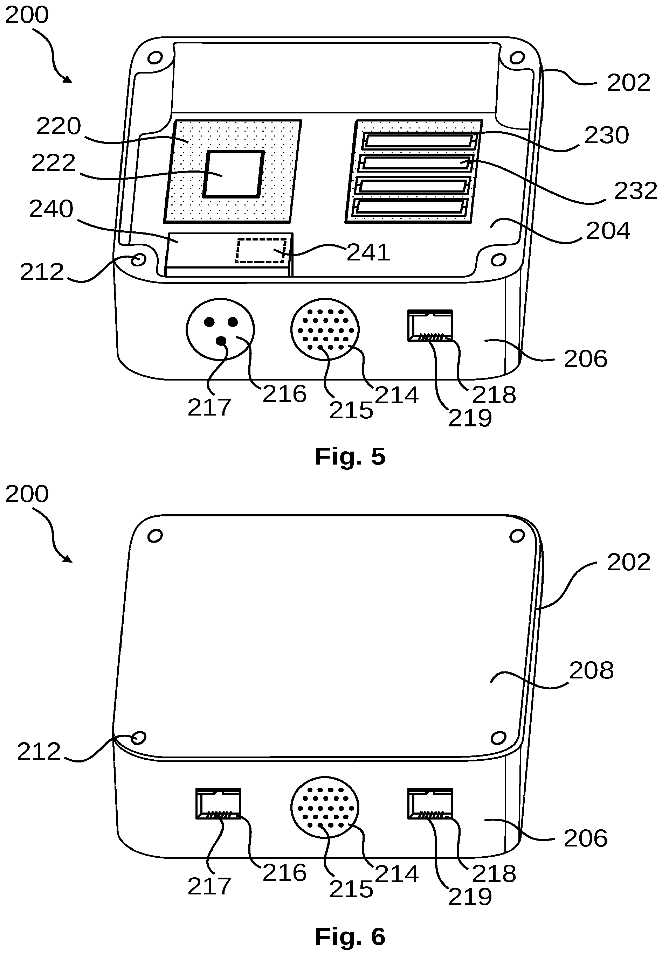

The robot 2 comprises a power bus 120, supplying power to each of the plurality of motors 102A, 102B, 104A, 104B, as well as other components in the robot 2. Although not illustrated specifically, it will be understood that connection between the plurality of motors 102A, 102B, 104A, 104B and the power bus 120 may include additionally non-illustrated components, such as motor controllers, H-bridges, inverters etc. Alternatively or additionally some of such components may form part of the motors 102A, 102B, 104A, 104B. The power bus 120 may supply a DC voltage, e.g. with a nominal voltage of 48 volts. As mentioned previously, the motors 102A, 102B, 104A, 104B may be AC motors, and may comprise control circuits controlling alternating currents in the stator of the motor to drive the motor based on a supplied DC voltage. The power bus 120 may comprise a power connector 121 (e.g. electrical base connector 24 of Fig. 1 and/or electrical control unit connector 216 of Fig. 5) for coupling the power bus 120 to an external power source, such as an external battery. The external power source may be a DC power source.

The robot 2 comprises one or more controllers 122, 122A, 122B, 122C, 122D. In the present example, the robot 2 comprises a primary controller 122. In some examples, as also illustrated, the robot 2 may additionally or alternatively comprise designated motor controllers 122A, 122B, 122C, 122D for some or each of the motors 102A, 102B, 104A, 104B. In the example where the robot 2 comprises a plurality of controllers 122, 122A, 122B, 122C, 122D, these may communicate with each other.

The primary controller 122 may be adapted to control operation of the motors 102A, 102B, 104A, 104B, to effectuate a desired movement of the robot. For example, the primary control unit 122 may be adapted to instruct the first primary motor 102A to provide a first primary movement and/or torque, which may result in the first primary motor 102A providing a first primary torque, and/or to instruct the second primary motor 102B to provide a second primary movement and/or torque, which may result in the second primary motor 102B providing a second primary torque, etc.

Alternatively or additionally, one or more of the motors 102A, 102B, 104A, 104B may be connected to designated motor controllers 122A, 122B, 122C, 122D, as also illustrated. These motor controllers may form part of the motors 102A, 102B, 104A, 104B or may be separate from the motors 102A, 102B, 104A, 104B. For example, as illustrated, the first primary motor 102A may be connected with a first primary motor controller 122A, the optional first secondary motor 104A may be connected with a first secondary motor controller 122B, the second primary motor 102B may be connected with a second primary motor controller 122C, and the optional second secondary motor 104B may be connected with a second secondary motor controller 122D. In some examples not all of the motors 102A, 102B, 104A, 104B be connected with such designated controller. Furthermore, a single motor controller, e.g. the first primary motor controller 122A, may be a common motor controller for a plurality of motors, e.g. both the first primary motor 102A and the first secondary motor 104A. The circuitry 106, as illustrated in Fig. 2, may be such common controller for a plurality of motors, e.g. the primary motor 102 and the secondary motor 104.

The motor controllers 122A, 122B, 122C, 122D, are adapted to, e.g. in combination with the primary controller 122, control operation of the motors 102A, 102B, 104A, 104B to effectuate a desired movement of the robot, e.g. by controlling the motors to provide certain designated movements and/or torques to effectuate the desired movement. The motor controllers 122A, 122B, 122C, 122D may contribute to effectuate the desired movement of the robot based on designated inputs from the primary controller 122.

Although not specifically illustrated, it should be understood that the controllers 122, 122A, 122B, 122C, 122D may be connected to the power bus 120, such as to be powered. Furthermore, connecting the controllers 122, 122A, 122B, 122C, 122D with the power bus 120 may allow the controllers 122, 122A, 122B, 122C, 122D to sense the voltage level of the power bus 120. Hence, the controllers 122, 122A, 122B, 122C, 122D may receive a voltage sensor input from the power bus 120 indicative of the voltage level of the power bus 120.

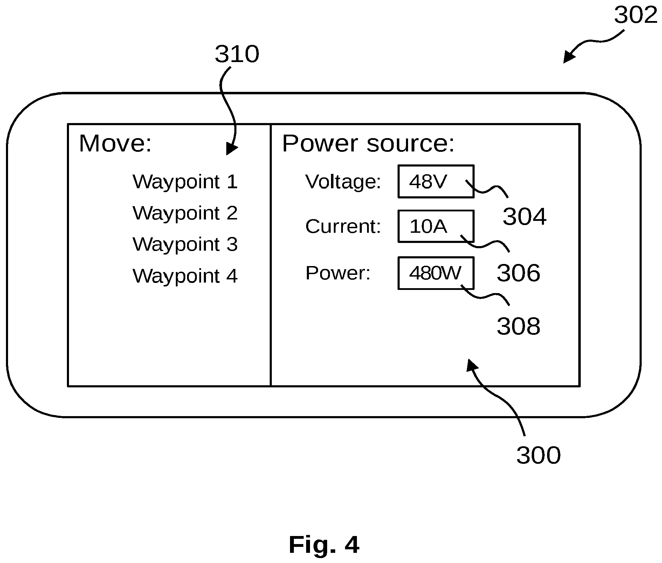

One or more of the controllers 122, 122A, 122B, 122C, 122D may be adapted to receive path data indicative of one or more paths for one or more parts of the robot to follow. For example, a user may designate in a user interface that an end effector of the robot should follow a certain path, and/or that one or more of the joints/joint assemblies should follow one or more paths. Such paths may be specified by specific waypoints defined in space. In some examples, one or more of the controllers 122, 122A, 122B, 122C, 122D may be also adapted to receive one or more electrical level inputs, such as a voltage level input and/or a current level input and/or a power level input. For example, a user may designate in the user interface that the robot should operate at a certain voltage, which may be a voltage below a nominal voltage for the robot, and/or the user may designate in the user interface that the robot should operate below a certain current level, which may be a current level below normally maximum available current. An exemplary user interface 300 for providing one or more electrical level inputs is schematically illustrated in Fig. 4.

Based on the path data, and optionally the one or more electrical level inputs, the one or more controllers 122, 122A, 122B, 122C, 122D, e.g. the primary controller 122, may determine a plurality of movements for the plurality of motors 102A, 102B, 104A, 104B. This may be referred to as trajectory planning. For example, it may be calculated how each of the motors 102A, 102B, 104A, 104B, and in effect the joint assemblies, should move over time. For example, what their individual position, velocity and/or acceleration should be at each point in time.

As the motors 102A, 102B, 104A, 104B may be intended to operate at a nominal voltage level, e.g. 48 volts, and/or with a normal maximum available current, e.g. of 40A, if the motors 102A, 102B, 104A, 104B are being supplied a lower voltage and/or is not able to draw enough current, it may result in the motors 102A, 102B, 104A, 104B not being able to operate at the intended velocity and/or acceleration. Therefore, the present disclosure, by optionally including one or more electrical level inputs, such as a voltage level input and/or a current level input and/or a power level input, in the determining of the plurality of movements, provides that the movements of the motors, such as velocity, e.g. the maximum velocity, and/or acceleration, e.g. maximum acceleration, of at least some of the motors 102A, 102B, 104A, 104B may be set, e.g. at a reduced level, to account for a voltage level lower than nominal and/or to account for a lower than normal maximum available current.

The one or more controllers 122, 122A, 122B, 122C, 122D may receive a voltage sensor input, e.g. from the power bus 120, indicative of the current voltage level of the power bus. It may be that the voltage level changes over time, e.g. due to a fluctuating input voltage, e.g. caused by a battery supplying power to the power bus 120 being discharged. It may also be that the voltage level is below a nominal voltage because of the power bus being supplied 24 volts instead of a nominal 48 volts.

The one or more controllers 122, 122A, 122B, 122C, 122D may receive one or more updated electrical level inputs, such as an updated current level input and/or an updated power level input. The one or more updated electrical level inputs may be provided by a power controller, which, for example, may be the primary controller 122, or may be a controller external to the robot 2. It may be that the available current changes over time, e.g. due to other components, e.g. external to the robot, such as a driving module of an AGV, is drawing more current from the same power source, e.g. battery, as the robot 2.

The one or more controllers 122, 122A, 122B, 122C, 122D may determine whether the voltage sensor input being indicative of the voltage level of the power bus 120 is below a predetermined voltage threshold. The predetermined voltage threshold may be the nominal voltage, e.g. 48 volts for the power bus 120, or it may be below the nominal voltage of the power bus 120, such as 5% or at least 5% below the nominal voltage. It may be beneficial to allow some minor fluctuation of the voltage level of the power bus 120, hence it may be advantageous that the predetermined voltage threshold is below the nominal voltage of the power bus 120. In some examples, where the plurality of movements has been determined based on the one or more electrical level inputs, the predetermined voltage threshold may be based on the one or more electrical level inputs, such as a voltage level input of the one or more electrical level inputs. For example, such that modification of the plurality of the movements is performed when the voltage level is below the voltage level used in initially determining the movements.

Alternatively or additionally, the one or more controllers 122, 122A, 122B, 122C, 122D may determine whether the one or more updated electrical level inputs are indicative of a current level below a predetermined current threshold. The predetermined current threshold may be a normal maximum current level of the robot 2, e.g. 40 amperes, or it may be below the normal maximum current level of the robot 2, such as 5% or at least 5% below the normal maximum current level. In some examples, where the plurality of movements has been determined based on the one or more electrical level inputs, the predetermined current threshold may be based on the one or more electrical level inputs, such as a current level input and/or a power level input of the one or more electrical level inputs. For example, such that modification of the plurality of the movements is performed when the current level indicated by the one or more updated electrical level inputs are below the initial current level as indicated by the one or more electrical level inputs used in initially determining the movements.

In accordance with the voltage sensor input being indicative of the voltage level being below the predetermined voltage threshold, the one or more controllers 122, 122A, 122B, 122C, 122D may be adapted to modify the plurality of movements based on the voltage sensor input. In accordance with the one or more updated electrical level inputs being indicative of a current level below the predetermined current threshold, the one or more controllers 122, 122A, 122B, 122C, 122D may be adapted to modify the plurality of movements based on the one or more updated electrical level inputs. Hence, the movements may be recalculated or adjusted based on the lower voltage of the power bus 120 and/or the lower updated current level as indicated by the one or more updated electrical level inputs. For example, the one or more controllers 122, 122A, 122B, 122C, 122D may modify the plurality of movements by reducing the velocity and/or acceleration, such as a maximum velocity and/or a maximum acceleration, of one or more or all of the motors 102A, 102B, 104A, 104B. Hence, the motors 102A, 102B, 104A, 104B may be instructed to operate at a lower velocity and/or acceleration when the voltage level of the power bus 120 is lower than nominal and/or when the one or more updated electrical level inputs is indicative of a current level below a normal maximum current level. As the motors 102A, 102B, 104A, 104B may be intended to operate at the nominal voltage level of the power bus 120, e.g. 48 volts, and/or with a normally available maximum current level, e.g. 40 amperes, if the motors 102A, 102B, 104A, 104B are being supplied a lower voltage, e.g. 36 volts or 24 volts, and/or is not able to draw sufficient current, e.g. only 20 amperes or only 10 amperes, it may result in the motors 102A, 102B, 104A, 104B not being able to operate at the intended velocity and/or acceleration. Therefore, the present disclosure provides that the velocity, e.g. the maximum velocity, and/or acceleration, e.g. maximum acceleration, of at least some of the motors 102A, 102B, 104A, 104B may be reduced when the voltage level is lower than nominal and/or when less current than normally is available. Accordingly, the movements may be modified to take into account such less capability of one or more of the motors 102A, 102B, 104A, 104B. For example, in initially determining the plurality of movements for the plurality of motors, e.g. by the primary controller 120, it may have been assumed that each of the motors 102A, 102B, 104A, 104B may be capable of running at up to 3000 rpm (e.g. for the rotor of the motor), e.g. amounting to 225 degrees/second for the output of the motor (including gearing of the motor). However, when detecting that voltage level is lower than nominal and/or when receiving information of less current than normally being available, the movements may be recalculated or modified assuming that each of the motors 102A, 102B, 104A, 104B, are capable of only running at up to a lower velocity, e.g. 2000 rpm (e.g. for the rotor of the motor), e.g. amounting to 150 degrees/second for the output of the motor.

If reducing the velocity and/or acceleration, such as the maximum velocity and/or maximum acceleration, of one or more or all of the motors 102A, 102B, 104A, 104B, the reduction in velocity and/or acceleration may be proportional with the relative difference between the voltage level and the predetermined voltage threshold and/or the nominal voltage for the power bus 120 and/or the initial voltage level (indicated by the one or more electrical level inputs, such as a voltage level input of the one or more electrical level inputs). For example, if the nominal voltage is 48 volts, for which it is assumed that each of the motors 102A, 102B, 104A, 104B is capable of running at up to 3000 rpm (e.g. for the rotor of the motor), e.g. amounting to 225 degrees/second for the output of the motor, when the voltage sensor input is indicative of the voltage level being at 24 volts, it may be assumed that each of the motors 102A, 102B, 104A, 104B is capable of only running at up to 1500 rpm (e.g. for the rotor of the motor), e.g. amounting to 112,5 degrees/second for the output of the motor. Alternatively, or additionally, the reduction in velocity and/or acceleration may be proportional with the relative difference between the current level indicated by the one or more updated electrical level inputs and the normal maximum current level of the robot and/or the initial current level (indicated by the one or more electrical level inputs, such as a current level input and/or a power level input of the one or more electrical level inputs).

In some examples, the motor controllers 122A, 122B, 122C, 122D may modify the movements by modifying operation of the respective motor based on the voltage sensor input and/or the one or more updated electrical level inputs. For example, the motor controllers 122A, 122B, 122C, 122D may adjust a pulse width of a pulse width modulated signal transmitted to the respective motor, e.g. to reduce the velocity and/or acceleration of the motors 102A, 102B, 104A, 104B.

Fig. 4 is a schematic diagram illustrating an exemplary user interface 300 being displayed on an exemplary teach pendant 302. The user interface 300 may be a graphical user interface. The user interface 300 is meant for configuring a robot, such as the robot 2 of Fig. 1. The teach pendant 302 may form part of the robot 2 of Fig. 1. The user interface 300 may comprise a plurality of different user interface screens, although Fig. 4 is merely exemplifying a single user interface screen of the user interface 300.

The user interface 300 comprises a plurality of input areas 304, 306, 308 where a user may provide one or more electrical level inputs, such as a voltage level input, a current level input and/or a power level input.

The user interface 300 comprises a first input area 304 where a user may provide a voltage level input of the one or more electrical level inputs. In the illustrated example, the voltage level input is set at 48V. The voltage level input may be provided by the user, based on knowledge of how the robot will be powered, e.g. if the robot is to be powered by a 24V battery, a 48V battery or another power source, and/or based on knowledge of the power source in some situation (e.g. when being discharged to a certain extent) only being able to provide a certain voltage, e.g. 40V. The first input area 304 may be provided as a numerical input field or as a drop-down menu for the user to select between a plurality of possible voltage level inputs.

The user interface 300 comprises a second input area 306 where a user may provide a current level input of the one or more electrical level inputs. In the illustrated example, the current level input is set at 10A. The current level input may be provided by the user, based on knowledge of how the robot will be powered, e.g. if the robot is to be powered by a battery with a maximum current of 10A, and/or based on whether other components will be drawing current from the same power source. The second input area 306 may be provided as a numerical input field or as a drop-down menu for the user to select between a plurality of possible current level inputs.

The user interface 300 comprises a third input area 308 where a user may provide a power level input of the one or more electrical level inputs. In the illustrated example, the power level input is set at 480W. The power level input may be provided by the user, based on knowledge of how the robot will be powered, e.g. if the robot is to be powered by a power supply with a maximum power output of 480W, and/or based on whether other components will be drawing current from the same power supply. The third input area 308 may be provided as a numerical input field or as a drop-down menu for the user to select between a plurality of possible power level inputs.

In some examples, only some of the shown input areas 304, 306, 308, may be present. For example, the second input area 306 and/or the third input area 308 may be omitted. In some examples, since power, voltage and current are related, the third value may be calculated when the user provides the two others. However, in other examples, all of power, voltage and current may be available and values may be entered into each input area regardless of the values of the other two. In such situation the system may determine the indicated current level as the lowest indication of the current level input of the second input area and the power level input of the third input area.

The exemplary user interface 300 also shows a plurality of waypoints 310 for the robot to follow. The plurality of waypoints 310 may form path data for the robot. The plurality of waypoints 308 may be given for one or more of the links and/or joints and/or an end effector of the robot.

Based on the voltage level input as provided in the first input area 304, the current level input as provided in the second input area 306 and/or the power level input as provided in the third input area 308, and the path data as provided by the plurality of waypoints 310, movements for the motors of the robot may be determined.

Figs. 5 and 6 schematically illustrates an exemplary control unit 200, as also mentioned in relation to Fig. 1. The illustrated control unit 200 is adapted to be arranged between a base of the robot and a structure to which the robot is to be fastened, as illustrated in Fig. 1. However, in other examples, a control unit may be provided which is arranged external to the robot, i.e. as a separate unit, which then may be connected to the robot by one or more cables.

The control unit 200 comprises a control unit housing 202. The control unit housing 202 comprises a bottom plate 204 and a sidewall 206. The sidewall 206 may be one integrally formed sidewall or may be made up of a plurality of sidewall parts, e.g. four sidewall parts. The control unit housing 202 may further comprise a top plate 208, as illustrated in Fig. 6. The bottom plate 204 is adapted to abut the structure to which the robot is to be fastened.

The control unit 200 comprises a control circuit 220 forming a primary controller of the robot. The control circuit 220 may be a PCB. The control circuit 220 may comprise a processing unit 222.

The control unit 200 may comprise an energy consumption unit 230. The energy consumption unit 230 may serve the purpose of handling excess power on a power bus of the robot and/or from motors of the robot, which may be generated in situations where a motor of the robot is braking an ongoing motion. The energy consumption unit 230 may comprise one or more resistors 232, which may handle such excess power by converting it to heat. In the illustrated example, the energy consumption unit 230 comprises four resistors 232. In other examples, the energy consumption unit 230 may comprise one resistor 232 for each of the motors of the joint assemblies of the robot, i.e. seven resistors 232 for a seven-axis robot. In examples, where the robot is powered by a battery, excess power generated by motors braking, may be handled by charging the battery. Thereby, use of the energy consumption unit 230 in battery powered setups may be omitted or reduced. Similarly, the energy consumption unit 230 may be omitted or reduced in battery powered setups.

The control unit 200 may comprise a power supply unit 240. The power supply unit 240 may be adapted to power the robot, such as the electrical components of the robot. The power supply unit 240 may be connected to the power bus 120 of Fig. 3. The power supply unit 240 may be connectable to an input power supply, such as a wall socket, e.g. supplying 230 V AC. In other examples, the power supply unit 240 may be connectable to an external battery, e.g. supplying 48V DC. In some examples, the power supply unit 240 may comprise an internal battery 241.

The control unit 200 may comprise one or more electrical control unit connectors 214, 216, 218, e.g. including a first electrical control unit connector 214, a second electrical control unit connector 216, and/or a third electrical control unit connector 218. The electrical control unit connectors 214, 216, 218 may comprise a plurality of respective control unit terminals 215, 217, 219. The first electrical control unit connector 214 may comprise first control unit terminals 215. The second electrical control unit connector 216 may comprise second control unit terminals 217. The third electrical control unit connector 218 may comprise third control unit terminals 219.

The first electrical control unit connector 214 may be adapted to couple with a teach pendant connector of a teach pendant for controlling and/or programming the robot. The second electrical control unit connector 216 may be a power connector for connecting a power chord for receiving power for powering the robot. For example, the power connector may be coupled with the power supply unit 240. The third electrical control unit connector 218 may be an ethernet connector or a USB connector. One or more of the first, second or third electrical control unit connectors may be omitted, or additional electrical control unit connectors may be additionally included.

The first electrical control unit connector 214, the second electrical control unit connector 216, and/or the third electrical control unit connector 218 may be arranged through the sidewall 202, as illustrated. The electrical control unit connectors 214, 216, 218 may be arranged through the same face of the side wall 202 as illustrated. However, in other examples, the electrical control unit connectors 214, 216, 218 may be arranged through different faces of the side wall 202.

The control unit 200 may comprise attachment holes 212. The attachment holes allow fastening of the robot on top of the control unit 200, as well as fastening to the structure onto which the robot is to be fastened. For example, the attachment holes 212 may be through holes, allowing fastening bolts 22 (see fig. 1) to extend therethrough, to thereby fasten both the control unit 200 and the robot to the structure.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

Exemplary embodiments of the present disclosure are set out in the following items:
1. A method for controlling a robot comprising a plurality of joint assemblies including a first joint assembly and a second joint assembly, the robot further comprises a plurality of motors including a first primary motor and a second primary motor, the method comprising:
   - receiving path data indicative of one or more paths for one or more parts of the robot, e.g. including the first joint assembly and/or the second joint assembly, to follow,
   - receiving one or more electrical level inputs indicative of a voltage level and/or a current level,
   - determining a plurality of movements for the plurality of motors based on the path data and the one or more electrical level inputs.
2. Method according to item 1, wherein the one or more electrical level inputs is received from a user via a user interface, optionally wherein the one or more electrical level inputs includes a voltage level input and/or a current level input and/or a power level input.
3. Method according to any of the preceding claims, wherein the one or more electrical level inputs are at least indicative of a voltage level, and wherein determining the plurality of movements includes determining velocity and/or acceleration of one or more of the plurality of motors, wherein the velocities of the one or more of the plurality of motors are first velocities when the one or more electrical level inputs are indicative of a first voltage level, wherein the velocities of the one or more of the plurality of motors are second velocities respectively lower than the first velocities when the one or more electrical level inputs are indicative of a second voltage level lower than the first voltage level.
4. Method according to item 3, wherein the respective relative differences between the first velocities and the second velocities are proportional with the relative difference between the first voltage level and the second voltage level.
5. Method according to any of the preceding items, wherein the one or more electrical level inputs are at least indicative of a current level, and wherein determining the plurality of movements includes determining velocity and/or acceleration of one or more of the plurality of motors, wherein the velocities of the one or more of the plurality of motors are primary velocities when the one or more electrical level inputs are indicative of a primary current level, wherein the velocities of the one or more of the plurality of motors are secondary velocities respectively lower than the primary velocities when the one or more electrical level inputs are indicative of a secondary current level lower than the primary current level.
6. Method according to item 5, wherein the respective relative differences between the primary velocities and the secondary velocities are proportional with the relative difference between the primary current level and the secondary current level.
7. Method according to any of the preceding items further comprising:
   - receiving a voltage sensor input indicative of a voltage level of a power bus, and
   - in accordance with the voltage sensor input being indicative of the voltage level being below a predetermined voltage threshold, modifying the plurality of movements based on the voltage sensor input.
8. Method according to item 7, wherein one or more electrical level inputs are indicative of an initial voltage level, and wherein the predetermined voltage threshold is below the initial voltage level, such as at least 5% below the initial voltage level.
9. Method according to item 8, wherein modifying the plurality of movements based on the voltage sensor input includes reducing velocity and/or acceleration of one or more of the plurality of motors, and optionally wherein the reduction in velocity and/or acceleration of the one or more of the plurality of motors is proportional with the relative difference between the voltage level and the predetermined voltage threshold or the initial voltage level.
10. Method according to any of the preceding items further comprising:
   - receiving one or more updated electrical level inputs, and
   - in accordance with the one or more updated electrical level inputs being indicative of a current level below a predetermined current threshold, modifying the plurality of movements based on the one or more updated electrical level inputs.
11. Method according to item 10 wherein the one or more updated electrical level inputs are based on evaluation of operation of components external to the robot, and optionally wherein the one or more updated electrical level inputs are received from a power controller evaluating the operation of the components external to the robot.
12. Method according to any of items 10-11, wherein the one or more electrical level inputs are indicative of an initial current level, and wherein the predetermined current threshold is below the initial current level, such as at least 5% below the initial current level.
13. Method according to any of items 10-12, wherein modifying the plurality of movements based on the one or more updated electrical level inputs includes reducing velocity and/or acceleration of one or more of the plurality of motors, and optionally wherein the reduction in velocity and/or acceleration of the one or more of the plurality of motors is proportional with the relative difference between the current level indicated by the one or more updated electrical level inputs and the predetermined current threshold or the relative difference between the current level indicated by the one or more updated electrical level inputs and the initial current level indicated by the one or more electrical level inputs.
14. A robot comprising a plurality of joint assemblies including a first joint assembly and a second joint assembly, the robot further comprises a plurality of motors including a first primary motor and a second primary motor,
   the first joint assembly comprises a first joint housing and the first primary motor connecting the first joint housing with a first primary link, the first primary motor being adapted to rotate the first primary link relative to the first joint housing around a first primary axis,
   the second joint assembly comprises a second joint housing and the second primary motor connecting the second joint housing with a second primary link, the second primary motor being adapted to rotate the second primary link relative to the second joint housing around a second primary axis,

   the robot further comprises a power bus supplying power to the plurality of motors, and one or more controllers adapted to control operation of the plurality of motors to effectuate a desired movement of the robot,
   the one or more controllers being adapted to:
      - receive path data indicative of one or more paths for one or more parts of the robot, e.g. including the first joint assembly and/or the second joint assembly, to follow,
      - receive one or more electrical level inputs indicative of a voltage level and/or a current level,
      - determine a plurality of movements for the plurality of motors based on the path data and the one or more electrical level inputs.
15. A method for controlling a robot comprising a plurality of joint assemblies including a first joint assembly and a second joint assembly, the robot further comprises a plurality of motors including a first primary motor and a second primary motor, the method comprising:
   - receiving path data indicative of one or more paths for one or more parts of the robot, e.g. including the first joint assembly and/or the second joint assembly, to follow,
   - determining a plurality of movements for the plurality of motors based on the path data,
   - receiving a voltage sensor input indicative of a voltage level of a power bus and/or receiving one or more updated electrical current level inputs, and
   - in accordance with the voltage sensor input being indicative of the voltage level being below a predetermined voltage threshold, modifying the plurality of movements based on the voltage sensor input, and/or in accordance with the one or more updated electrical level inputs being indicative of a current level below a predetermined current threshold, modifying the plurality of movements based on the one or more updated electrical level inputs.
16. A method for controlling a robot comprising a plurality of joint assemblies including a first joint assembly and a second joint assembly, the robot further comprises a plurality of motors including a first primary motor and a second primary motor, the method comprising:
   - receiving path data indicative of one or more paths for one or more parts of the robot, e.g. including the first joint assembly and/or the second joint assembly, to follow,
   - determining a plurality of movements for the plurality of motors based on the path data,
   - receiving a voltage sensor input indicative of a voltage level of a power bus, and
   - in accordance with the voltage sensor input being indicative of the voltage level being below a predetermined voltage threshold, modifying the plurality of movements based on the voltage sensor input.
17. Method according to any of items 15-16, wherein the predetermined voltage threshold is below a nominal voltage of the power bus, such as at least 5% below the nominal voltage, optionally the nominal voltage is 48 volts.
18. Method according to any of items 15-17, wherein modifying the plurality of movements based on the voltage sensor input includes reducing velocity and/or acceleration of one or more of the plurality of motors, and optionally wherein the reduction in velocity and/or acceleration of the one or more of the plurality of motors is proportional with the relative difference between the voltage level and the predetermined voltage threshold or a nominal voltage of the power bus.
19. A method for controlling a robot comprising a plurality of joint assemblies including a first joint assembly and a second joint assembly, the robot further comprises a plurality of motors including a first primary motor and a second primary motor, the method comprising:
   - receiving path data indicative of one or more paths for one or more parts of the robot, e.g. including the first joint assembly and/or the second joint assembly, to follow,
   - determining a plurality of movements for the plurality of motors based on the path data,
   - receiving one or more updated electrical level inputs, and
   - in accordance with the one or more updated electrical level inputs being indicative of a current level below a predetermined current threshold, modifying the plurality of movements based on the one or more updated electrical level inputs.
20. Method according to any of items 15 18, wherein the one or more updated electrical level inputs is based on evaluation of operation of components external to the robot, and optionally wherein the one or more updated electrical level inputs are received from a power controller evaluating the operation of the components external to the robot.
21. Method according to any of items 15-20, wherein modifying the plurality of movements based on the one or more updated electrical level inputs includes reducing velocity and/or acceleration of one or more of the plurality of motors, and optionally wherein the reduction in velocity and/or acceleration of the one or more of the plurality of motors is proportional with the relative difference between the current level indicated by the one or more updated electrical level inputs and the predetermined current threshold or a normal maximum current level of the robot.
22. A robot comprising a plurality of joint assemblies including a first joint assembly and a second joint assembly, the robot further comprises a plurality of motors including a first primary motor and a second primary motor,
   the first joint assembly comprises a first joint housing and the first primary motor connecting the first joint housing with a first primary link, the first primary motor being adapted to rotate the first primary link relative to the first joint housing around a first primary axis,
   the second joint assembly comprises a second joint housing and the second primary motor connecting the second joint housing with a second primary link, the second primary motor being adapted to rotate the second primary link relative to the second joint housing around a second primary axis,

   the robot further comprises a power bus supplying power to the plurality of motors, and one or more controllers adapted to control operation of the plurality of motors to effectuate a desired movement of the robot,
   the one or more controllers being adapted to:
      - receive path data indicative of one or more paths for one or more parts of the robot, e.g. including the first joint assembly and/or the second joint assembly, to follow,
      - determine a plurality of movements for the plurality of motors based on the path data,
      - receive a voltage sensor input indicative of a voltage level of the power bus, and
      - in accordance with the voltage sensor input being indicative of the voltage level being below a predetermined voltage threshold, modify the plurality of movements based on the voltage sensor input.
23. A robot comprising a plurality of joint assemblies including a first joint assembly and a second joint assembly, the robot further comprises a plurality of motors including a first primary motor and a second primary motor,
   the first joint assembly comprises a first joint housing and the first primary motor connecting the first joint housing with a first primary link, the first primary motor being adapted to rotate the first primary link relative to the first joint housing around a first primary axis,
   the second joint assembly comprises a second joint housing and the second primary motor connecting the second joint housing with a second primary link, the second primary motor being adapted to rotate the second primary link relative to the second joint housing around a second primary axis,

   the robot further comprises a power bus supplying power to the plurality of motors, and one or more controllers adapted to control operation of the plurality of motors to effectuate a desired movement of the robot,
   the one or more controllers being adapted to:
      - receive path data indicative of one or more paths for one or more parts of the robot, e.g. including the first joint assembly and/or the second joint assembly, to follow,
      - determine a plurality of movements for the plurality of motors based on the path data,
      - receive one or more updated electrical level inputs, and
      - in accordance with the one or more updated electrical level inputs being indicative of a current level below a predetermined current threshold, modifying the plurality of movements based on the one or more updated electrical level inputs.
24. Robot according to any of items 14, 22-23, wherein the power bus is DC powered.
25. Robot according to any of items 14, 22-24 comprising a control unit arranged below a base of the robot to be positioned between the base of the robot and a structure to which the robot is to be fastened, wherein the control unit comprises a primary controller of the one or more controllers.
26. Robot according to any of items 14, 22-25 comprising a battery wherein the power bus is powered by the battery.
27. Robot according to any of items 14, 22-26, wherein the power bus comprises a power connector for coupling the power bus to an external power source, such as an external battery, wherein optionally the external power source is a DC power source, e.g. at 24 volts or 48 volts.
28. Robot according to any of items 26-27 as dependent on item 25, wherein the control unit comprises the battery and/or the power connector.
29. Robot according to any of items 14, 22-28, wherein the one or more controllers includes a plurality of motor controllers controlling operation of the plurality of motors,
   wherein the first joint assembly comprises a first primary motor controller controlling operation of the first primary motor, and
   wherein modifying the plurality of movements includes the first primary motor controller modifying operation of the first primary motor based on the voltage sensor input and/or based on the one or more updated electrical level inputs, e.g. by adjusting a pulse width of a pulse width modulated signal transmitted to the first primary motor.
30. Robot according to any of items 14, 22-29, wherein the first joint assembly comprises a first secondary motor connecting the first joint housing with a first secondary link, the first secondary motor being adapted to rotate the first secondary link relative to the first joint housing around a first secondary axis non-parallel with the first primary axis.
31. A control unit for a robot, the control unit being adapted to be arranged between a base of the robot and a structure to which the robot is to be fastened, the control unit comprising:
   - a control unit housing comprising a bottom plate and a sidewall, wherein the bottom plate is adapted to abut the structure, the bottom plate and/or the sidewall forming an inner surface of the control unit housing,
   - a primary controller adapted to:
      - receive path data indicative of one or more paths for one or more parts of the robot to follow,
      - receive one or more electrical level inputs indicative of a voltage level and/or a current level,
      - determine a plurality of movements for a plurality of motors of the robot based on the path data and the one or more updated electrical level inputs.
32. A control unit for a robot, the control unit being adapted to be arranged between a base of the robot and a structure to which the robot is to be fastened, the control unit comprising:
   - a control unit housing comprising a bottom plate and a sidewall, wherein the bottom plate is adapted to abut the structure, the bottom plate and/or the sidewall forming an inner surface of the control unit housing,
   - a primary controller adapted to:
      - receive path data indicative of one or more paths for one or more parts of the robot to follow,
      - determine a plurality of movements for a plurality of motors of the robot based on the path data,
      - receive a voltage sensor input indicative of a voltage level of a power bus of the robot, and
      - in accordance with the voltage sensor input being indicative of the voltage level being below a predetermined voltage threshold, modify the plurality of movements based on the voltage sensor input.
33. A control unit for a robot, the control unit being adapted to be arranged between a base of the robot and a structure to which the robot is to be fastened, the control unit comprising:
   - a control unit housing comprising a bottom plate and a sidewall, wherein the bottom plate is adapted to abut the structure, the bottom plate and/or the sidewall forming an inner surface of the control unit housing,
   - a primary controller adapted to:
      - receive path data indicative of one or more paths for one or more parts of the robot to follow,
      - determine a plurality of movements for a plurality of motors of the robot based on the path data,
      - receive a voltage sensor input indicative of a voltage level of a power bus of the robot, and
      - in accordance with the voltage sensor input being indicative of the voltage level being below a predetermined voltage threshold, modify the plurality of movements based on the voltage sensor input.
34. Control unit according to any of items 31-33 comprising a battery, and wherein the power bus is powered by the battery.
35. Control unit according to any of items 31-34 comprising a power connector for coupling the power bus to an external power source, such as an external battery, wherein optionally the external power source is a DC power source, e.g. at 24 volts or 48 volts.

### LIST OF REFERENCES

- 2: robot
- 4: base
- 6: first link
- 8: first joint assembly
- 10: second link
- 12: second joint assembly
- 14: third link
- 16: third joint assembly
- 18: fourth link
- 20: fourth joint assembly
- 22: fastening bolts
- 24: first electrical base connector
- 25: external power source
- 26: second electrical base connector
- 90: joint assembly
- 92: primary link
- 94: secondary link
- 100: joint housing
- 102: primary motor
- 104: secondary motor
- 106: circuitry
- 120: power bus
- 121: power connector
- 122: primary controller
- 122A, 122B, 122C, 122D: motor controller
- 200: control unit
- 202: control unit housing
- 204: bottom plate
- 206: side wall
- 208: top plate
- 212: attachment holes
- 214: first electrical control unit connector
- 215: first control unit terminals
- 216: second electrical control unit connector
- 217: second control unit terminals
- 218: third electrical control unit connector
- 219: third control unit terminals
- 220: control circuit
- 222: processing unit
- 230: energy consumption unit
- 232: resistor
- 240: power supply unit
- 300: user interface
- 302: teach pendant
- 304: first input area
- 306: second input area
- 308: third input area
- 310: waypoints
- Ax1: first axis
- Ax2: second axis
- Ax3: third axis
- Ax4: fourth axis
- Ax5: fifth axis
- Ax6: sixth axis
- Ax7: seventh axis

## Claims

1. A method for controlling a robot comprising a plurality of joint assemblies including a first joint assembly and a second joint assembly, the robot further comprises a plurality of motors including a first primary motor and a second primary motor, the method comprising:
- receiving path data indicative of one or more paths for one or more parts of the robot, e.g. including the first joint assembly and/or the second joint assembly, to follow,
- receiving one or more electrical level inputs indicative of a voltage level and/or a current level,
- determining a plurality of movements for the plurality of motors based on the path data and the one or more electrical level inputs.

2. Method according to claim 1, wherein the one or more electrical level inputs is received from a user via a user interface, optionally wherein the one or more electrical level inputs includes a voltage level input and/or a current level input and/or a power level input.

3. Method according to any of the preceding claims, wherein the one or more electrical level inputs are at least indicative of a voltage level, and wherein determining the plurality of movements includes determining velocity and/or acceleration of one or more of the plurality of motors, wherein the velocities of the one or more of the plurality of motors are first velocities when the one or more electrical level inputs are indicative of a first voltage level, wherein the velocities of the one or more of the plurality of motors are second velocities respectively lower than the first velocities when the one or more electrical level inputs are indicative of a second voltage level lower than the first voltage level.

4. Method according to claim 3, wherein the respective relative differences between the first velocities and the second velocities are proportional with the relative difference between the first voltage level and the second voltage level.

5. Method according to any of the preceding claims, wherein the one or more electrical level inputs are at least indicative of a current level, and wherein determining the plurality of movements includes determining velocity and/or acceleration of one or more of the plurality of motors, wherein the velocities of the one or more of the plurality of motors are primary velocities when the one or more electrical level inputs are indicative of a primary current level, wherein the velocities of the one or more of the plurality of motors are secondary velocities respectively lower than the primary velocities when the one or more electrical level inputs are indicative of a secondary current level lower than the primary current level.

6. Method according to claim 5, wherein the respective relative differences between the primary velocities and the secondary velocities are proportional with the relative difference between the primary current level and the secondary current level.

7. Method according to any of the preceding claims further comprising:
- receiving a voltage sensor input indicative of a voltage level of a power bus, and
- in accordance with the voltage sensor input being indicative of the voltage level being below a predetermined voltage threshold, modifying the plurality of movements based on the voltage sensor input.

8. Method according to claim 7, wherein the one or more electrical level inputs are indicative of an initial voltage level, and wherein the predetermined voltage threshold is below the initial voltage level, such as at least 5% below the initial voltage level.

9. Method according to claim 8, wherein modifying the plurality of movements based on the voltage sensor input includes reducing velocity and/or acceleration of one or more of the plurality of motors, and optionally wherein the reduction in velocity and/or acceleration of the one or more of the plurality of motors is proportional with the relative difference between the voltage level and the predetermined voltage threshold or the initial voltage level.

10. Method according to any of the preceding claims further comprising:
- receiving one or more updated electrical level inputs, and
- in accordance with the one or more updated electrical level inputs being indicative of a current level below a predetermined current threshold, modifying the plurality of movements based on the one or more updated electrical level inputs.

11. Method according to claim 10 wherein the one or more updated electrical level inputs are based on evaluation of operation of components external to the robot, and optionally wherein the one or more updated electrical level inputs are received from a power controller evaluating the operation of the components external to the robot.

12. Method according to any of claims 10-11, wherein the one or more electrical level inputs are indicative of an initial current level, and wherein the predetermined current threshold is below the initial current level, such as at least 5% below the initial current level.

13. Method according to any of claims 10-12, wherein modifying the plurality of movements based on the one or more updated electrical level inputs includes reducing velocity and/or acceleration of one or more of the plurality of motors, and optionally wherein the reduction in velocity and/or acceleration of the one or more of the plurality of motors is proportional with the relative difference between the current level indicated by the one or more updated electrical level inputs and the predetermined current threshold or the relative difference between the current level indicated by the one or more updated electrical level inputs and the initial current level indicated by the one or more electrical level inputs.

14. A robot comprising a plurality of joint assemblies including a first joint assembly and a second joint assembly, the robot further comprises a plurality of motors including a first primary motor and a second primary motor,
the first joint assembly comprises a first joint housing and the first primary motor connecting the first joint housing with a first primary link, the first primary motor being adapted to rotate the first primary link relative to the first joint housing around a first primary axis,
the second joint assembly comprises a second joint housing and the second primary motor connecting the second joint housing with a second primary link, the second primary motor being adapted to rotate the second primary link relative to the second joint housing around a second primary axis,
the robot further comprises a power bus supplying power to the plurality of motors, and one or more controllers adapted to control operation of the plurality of motors to effectuate a desired movement of the robot,
the one or more controllers being adapted to:
- receive path data indicative of one or more paths for one or more parts of the robot, e.g. including the first joint assembly and/or the second joint assembly, to follow,
- receive one or more electrical level inputs indicative of a voltage level and/or a current level,
- determine a plurality of movements for the plurality of motors based on the path data and the one or more electrical level inputs.

15. A method for controlling a robot comprising a plurality of joint assemblies including a first joint assembly and a second joint assembly, the robot further comprises a plurality of motors including a first primary motor and a second primary motor, the method comprising:
- receiving path data indicative of one or more paths for one or more parts of the robot, e.g. including the first joint assembly and/or the second joint assembly, to follow,
- determining a plurality of movements for the plurality of motors based on the path data,
- receiving a voltage sensor input indicative of a voltage level of a power bus and/or receiving one or more updated electrical current level inputs, and
- in accordance with the voltage sensor input being indicative of the voltage level being below a predetermined voltage threshold, modifying the plurality of movements based on the voltage sensor input, and/or in accordance with the one or more updated electrical level inputs being indicative of a current level below a predetermined current threshold, modifying the plurality of movements based on the one or more updated electrical level inputs.
